(19)

Europäisches Patentamt

European Patent Office

Office européen des brevets

(11) **EP 3 828 785 A2**

(12) **EUROPEAN PATENT APPLICATION**

(43) Date of publication:
02.06.2021 Bulletin 2021/22

(51) Int Cl.:
*G06N 20/10* (2019.01)      *G06N 20/20* (2019.01)

(21) Application number: **20206924.1**

(22) Date of filing: **11.11.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority:  **29.11.2019   JP 2019216323**

(71) Applicant: **FUJITSU LIMITED**
**Kanagawa 211-8588 (JP)**

(72) Inventors:
• **Ito, Toshio**
  **Kanagawa, 211-8588 (JP)**
• **Anan, Taizo**
  **Kanagawa, 211-8588 (JP)**
• **Ikeda, Takuro**
  **Kanagawa, 211-8588 (JP)**

(74) Representative: **Hoffmann Eitle**
**Patent- und Rechtsanwälte PartmbB**
**Arabellastraße 30**
**81925 München (DE)**

(54) **COMPOSITE MODEL GENERATION PROGRAM, COMPOSITE MODEL GENERATION METHOD, AND INFORMATION PROCESSING APPARATUS**

(57)     A composite model generation program causes a computer to execute a process, the process comprising: acquiring a first model that is created using a plurality of pieces of training data and outputs a first estimation result estimated with respect to first input data and a second model that is created based on a physical law or human knowledge and outputs a second estimation result estimated with respect to second input data; identifying, by comparing the first model and the second model with each other, a missing class that is not included in classes of the second input data among classes of the first input data; extending the second model with a correction term for input of input data of the missing class; and generating a composite model in which the extended second model and the first model are fused together.

FIG. 1

EP 3 828 785 A2

**Description**

FIELD

The embodiment discussed herein is related to a composite model generation program, a composite model generation method, and an information processing apparatus.

BACKGROUND

Due to the recent spread of the Internet of Things (IoT), attention has been focused on a predictive maintenance that predicts a failure and performs maintenance using measurement data from a sensor mounted on a facility or a machine. By performing a predictive maintenance, maintenance may be performed optimally and minimally, which may result in suppression of costs. Further, there is also known a technique of predicting the consumption of a battery mounted on an EV car, and presenting the prediction result to a driver.

In the related art, as a model used for the above-described prediction, a model created by a data driven method such as machine learning using training data or a model of a model based method created using physical laws or expert knowledge is known. Further, a hybrid model in which these models are fused is also known.

Related techniques are disclosed in, for example, Japanese National Publication of International Patent Application No. 2015-535900, Japanese Laid-Open Patent Publication No. 2019-040244, Japanese National Publication of International Patent Application No. 2010-536099, Japanese National Publication of International Patent Application No.2014-525063, and Japanese National Publication of International Patent Application No.2019-507444.

In order to create such a hybrid model, the dimensions of models to be fused (the classes of input data that is input to models) need to match, which makes it difficult to create a hybrid model from models with different dimensions.

It is an object in one aspect of the embodiment to provide a composite model generation program, method, and apparatus which enable generation of a composite model from first and second models in which the classes of input data are partially common.

SUMMARY

According to an aspect of the embodiment, a composite model generation program causes a computer to execute a process, the process comprising: acquiring a first model that is created using a plurality of pieces of training data and outputs a first estimation result estimated with respect to first input data and a second model that is created based on a physical law or human knowledge and outputs a second estimation result estimated with respect to second input data; identifying, by comparing the first model and the second model with each other, a missing class that is not included in classes of the second input data among classes of the first input data; extending the second model with a correction term for input of input data of the missing class; and generating a composite model in which the extended second model and the first model are fused together.

It is possible to generate a composite model from first and second models in which the classes of input data are partially common.

BRIEF DESCRIPTION OF DRAWINGS

FIG. 1 is a diagram illustrating a configuration of an information processing system associated with an embodiment;
FIG. 2 is a diagram illustrating a hardware configuration of a server;
FIG. 3 is a functional block diagram of the server;
FIG. 4 is a table summarized for a model DM and a model M;
FIG. 5 is a flowchart illustrating a processing of the server 10;
FIG. 6A is a diagram illustrating an example of the model M, and FIG. 6B is a diagram illustrating an example of the model DM;
FIG. 7 is a diagram illustrating a state where the model M is extended to generate an extended model MM; and
FIG. 8 is a diagram illustrating a hybrid model HM generated from the model DM and the extended model MM.

DESCRIPTION OF EMBODIMENT

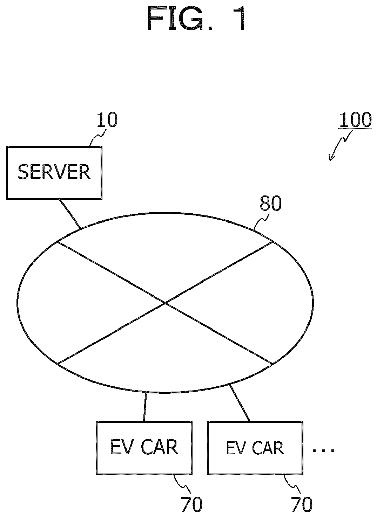

Hereinafter, an embodiment of an information processing system will be described in detail with reference to FIGs. 1 to 8. The information processing system 100 illustrated in FIG. 1 is a system that estimates battery consumption in a case of traveling on a candidate route when a user searches for a route in a car navigation system of an electric vehicle (EV) car 70, and provides the user with estimation results as well as the candidate route.

As illustrated in FIG. 1, the information processing system 100 includes a server 10 and the EV car 70. The server 10 and the EV car 70 are connected to a network 80 such as the Internet, and thus, data may be exchanged between the server 10 and the EV car 70.

The server 10 is an information processing apparatus that generates a model used for the estimation of battery consumption in each EV car 70 and provides the model to the EV car 70. The model generated by the server 10 is a hybrid model (composite model) in which two models are fused together. One of the two models (e.g., first model) is a model created by a data driven method such as machine learning using training data. Further, the other model (e.g., second model) is a model of a model-based method created using physical laws or expert knowledge. In addition, each model is assumed to be created for each same vehicle type equipped with the same EV battery (hereinafter simply referred to as "same vehicle type"). When creating a model used in a certain vehicle type, the server 10 is assumed to use various data obtained from the same vehicle type.

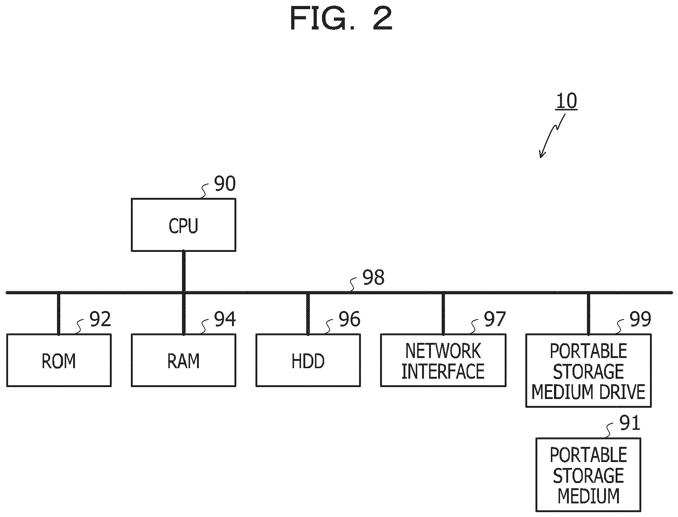

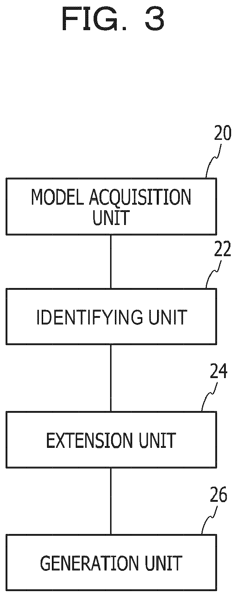

FIG. 2 illustrates a hardware configuration of the server 10. As illustrated in FIG. 2, the server 10 includes a Central Processing Unit (CPU) 90, a Read Only Memory (ROM) 92, a Random Access Memory (RAM) 94, a storage (here, Hard Disk Drive (HDD)) 96, a network interface 97, and a portable storage medium drive 99. These components of the server 10 are connected respectively to a bus 98. In the server 10, the CPU 90 executes programs (including a composite model generation program) stored in the ROM 92 or the HDD 96 or programs (including a composite model generation program) read by the portable storage medium drive 99 from a portable storage medium 91, thereby implementing functions of respective units illustrated in FIG. 3. In addition, the functions of the respective units in FIG. 3 may be implemented by, for example, an integrated circuit such as an Application Specific Integrated Circuit (ASIC) or a Field Programmable Gate Array (FPGA).

FIG. 3 illustrates a functional block diagram of the server 10. The CPU 90 of the server 10 functions as a model acquisition unit 20 as an acquisition unit, an identifying unit 22, an extension unit 24, and a generation unit 26 by executing programs.

The model acquisition unit 20 acquires a model (first model) created by a data-driven method such as machine learning using training data and a model (second model) of a model-based method created using physical laws or expert knowledge. In the following, the first model will be referred to as "model DM" and the second model will be referred to as "model M."

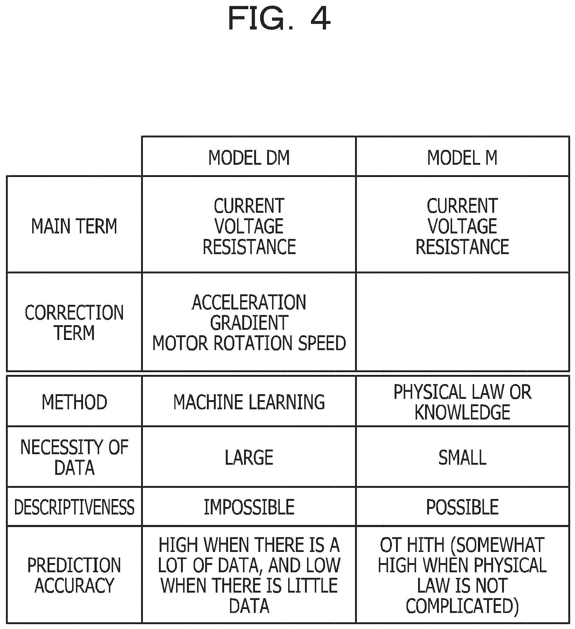

For example, as illustrated in FIG. 4, the model DM includes main terms (three-dimensional): current, voltage, and resistance, and correction terms (three-dimensional): acceleration, gradient, and motor rotation speed. More specifically, the model DM is capable of estimating the output current of an EV battery by inputting the voltage, the resistance, the acceleration of the EV car 70, the gradient of the road on which the EV car 70 travels, and the motor rotation speed.

Here, since the model DM is created from training data by machine learning, the accuracy of prediction is high when there is a lot of training data, but the accuracy of prediction is low when there is little data. Further, the model DM is not capable of explaining about the prediction result as to why the prediction result was obtained. The model acquisition unit 20 executes machine learning using, as training data, data obtained from the EV car 70 of the same vehicle type to create the model DM. The model DM is, for example, a kernel regression function generated by k-nearest neighbor crossed kernel regression.

Meanwhile, for example, as illustrated in FIG. 4, the model M is an equivalent circuit model of an EV battery and includes main terms (three-dimensional): current, voltage, and resistance. More specifically, the model M is capable of estimating the output current of an EV battery by inputting input data such as voltage and resistance.

Here, the model M is created using physical laws or knowledge, and therefore, is capable of explaining the reason for the estimation result. Further, when the physical laws are not so complicated, some degree of prediction accuracy may be anticipated.

Referring back to FIG. 3, the identifying unit 22 compares the model M with the model DM and identifies a term not included in the model M (the classes of input data that is input to the model M) among terms included in the model DM (the classes of input data that is input to the model DM). In the example of FIG. 4, the correction terms (acceleration, gradient, and motor rotation speed) of the model DM are identified.

The extension unit 24 adds, as a new term that plays a correction role, the term identified by the identifying unit 22 to the model M to create an extended model (hereinafter referred to as "extended model MM") having the dimension matched with the model DM. That is, the dimension of the extended model MM matches with the dimension of the model DM.

The generation unit 26 fuses the extended model MM created by the extension unit 24 and the model DM to generate a hybrid model HM. At this time, since the dimension of the extended model MM and the dimension of the model DM match each other, the hybrid model HM may be easily generated. The generation unit 26 transmits the generated hybrid model HM to the EV car 70.

The EV car 70 is a vehicle that is equipped with an EV battery and runs using a motor as a power source. The EV car 70 includes not only a sensor capable of measuring the voltage and resistance of the EV battery but also a sensor capable of measuring the acceleration of the EV car 70, the gradient of the road on which the vehicle is traveling, and the rotation speed of the motor.

The EV car 70 is equipped with a car navigation system (car navigation). The car navigation acquires the hybrid model HM generated in the server 10. Further, when the user searches for a route, the car navigation inputs information on a candidate route or data obtained by various sensors of the EV car 70 to the hybrid model HM, thereby estimating the output current of the EV battery after traveling on the candidate route and at the same time, estimating battery consumption. Then, the car navigation provides the user with information on the estimated battery consumption along with information on the candidate route. The user selects a route to be adopted from candidate routes by referring to the output battery consumption.

(About Processing of Server 10)

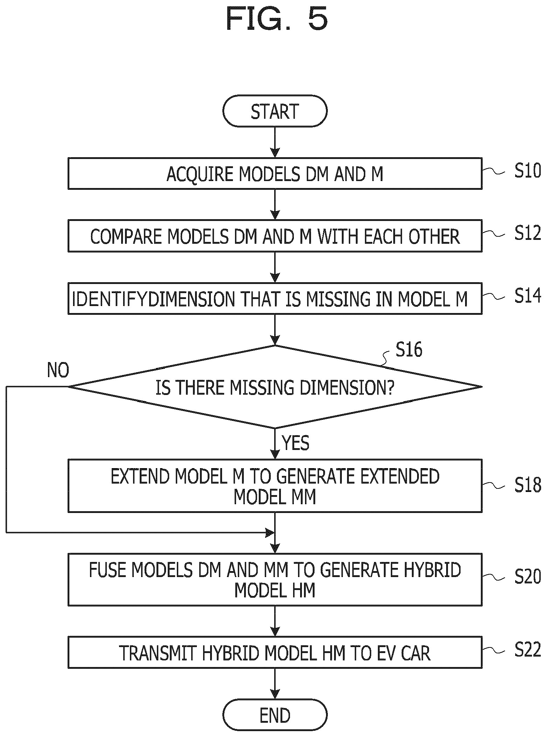

Hereinafter, a processing flow of the server 10 will be described in detail while appropriately referring to the flowchart of FIG. 5 and other drawings. In addition, the processing of FIG. 5 is a processing executed at the timing depending on a manager's input, at a predetermined period, or at the timing when data collected in the EV car 70 reaches a predetermined amount or more. In the following description of the processing, a case where the model M is two-dimensional and the model DM is three-dimensional will be described for simplification of description and drawings.

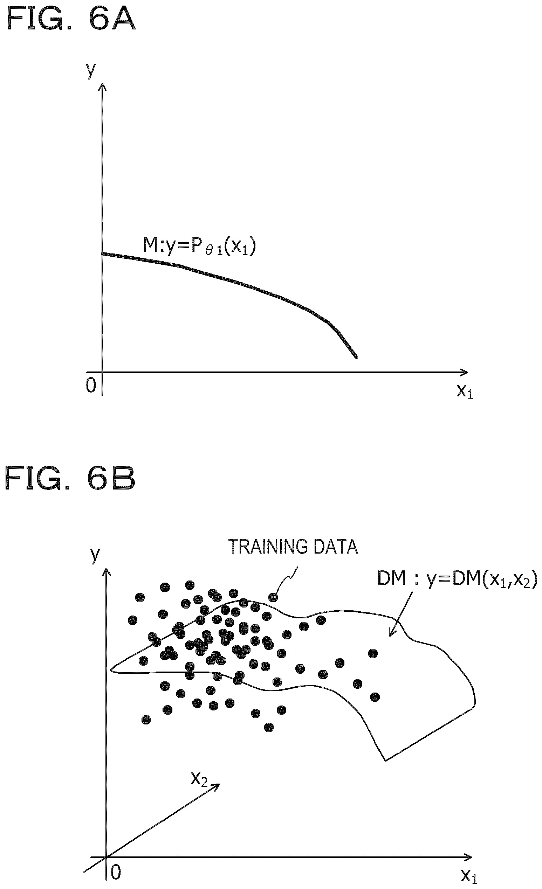

When the processing of FIG. 5 starts, first, in operation S10, the model acquisition unit 20 acquires the models DM and M. Here, the model M is a model of a model based method created using physical laws or expert knowledge, and is assumed to be stored in, for example, a storage device of the EV car 70. The model acquisition unit 20 acquires the model M from the EV car 70 via the network 80. Here, it is assumed that a two-dimensional model $y=P_{\theta 1}(x_1)$ as illustrated in FIG. 6A is acquired as the model M. In addition, "$\theta 1$" is a parameter. This model M is a model capable of estimating "$y$" by inputting "$x_1$" as input data. Here, the model M is, for example, a model for estimating battery consumption created by a manufacturer of the EV battery. Therefore, when estimating the battery consumption of the EV battery, the model does not consider the correction terms such as the acceleration of the EV car 70, the road gradient, and the motor rotation speed.

Meanwhile, the model DM is obtained by machine learning and obtained using a large number of pieces of training data as illustrated in FIG. 6B. Here, the model acquisition unit 20 acquires a large number of pieces of training data from a large number of EV cars 70 to perform machine learning, and is assumed to obtain a three-dimensional model $y=DM(xi, x_2)$ as the model DM. This model DM is capable of estimating "$y$" by inputting "$x_1$" and "$x_2$" as input data. Here, the model DM is, for example, a model that estimates the battery consumption using various data obtained from the EV car 70 equipped with the EV battery. For this reason, when estimating the battery consumption of the EV battery, the model considers the correction terms such as the acceleration of the EV car 70, the road gradient, and the motor rotation speed.

Next, in operation S12, the identifying unit 22 compares the models DM and M. Specifically, the identifying unit 22 compares the classes of input data that may be input to the models DM and M.

Next, in operation S14, the identifying unit 22 identifies the dimension that exists in the model DM, but is missing in the model M, *i.e.,* a term that is not included in the classes of input data that may be input to the model M among the classes of input data that may be input to the model DM. In the example of FIGs. 6A and 6B, "$x_2$" is identified.

Next, in operation S16, the identifying unit 22 determines whether or not there is a missing dimension. When the determination in operation S16 is affirmative, the processing proceeds to operation S18.

When the processing proceeds to operation S18, the extension unit 24 extends the model M to generate the extended model MM. In the example of FIG. 6A, the extension unit 24 prepares the following equation (1) by using $P_{\theta 1}(x_1)$ as a main term and adding a correction term $Q_{\theta 2}(x_1, x_2)$ thereto.

$$y = P_{\theta 1}(x_1) + P_{\theta 2}(x_1, x_2) \qquad ...(1)$$

Here, when the model M is a differential equation system model, the correction term $Q_{\theta 2}(x_1, x_2)$ may be sufficiently approximated by a polynomial expression of nm order ("$n$" and "$m$" represent natural numbers). Therefore, assuming that the parameter $\theta 2$ is $a_{i,j}$, the correction term $Q_{\theta 2}(x_1, x_2)$ may be represented by the following equation (2).

$$Q_{\theta 2}(x_1, x_2) = \overset{m}{\underset{i=0}{Q}} \; \overset{n}{\underset{j=0}{Q}} \; \alpha_{i,j} x_1^{\,i} x_2^{\,j}$$

...(2)

In addition, when the model M is a kinematic model, the correction term $Q_{\theta 2}(x_1, x_2)$ may be sufficiently approximated by a cubic polynomial expression. Thus, the correction term $Q_{\theta 2}(x_1, x_2)$ may be easily obtained.

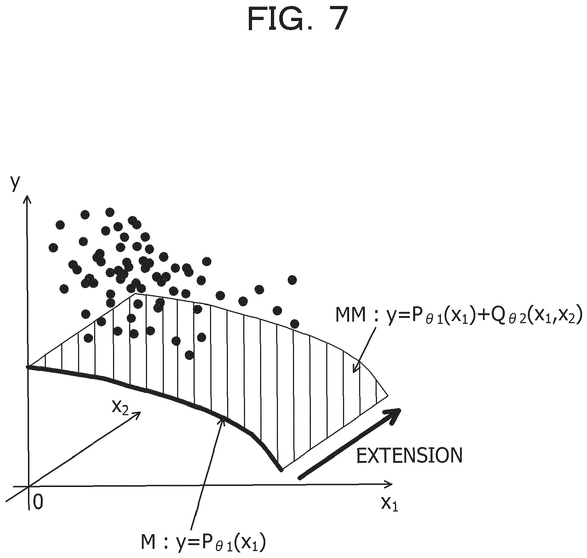

The extension unit 24 adjusts "θ1" and "θ2" using training data in the equations represented by (1) and (2) to generate the extended model MM. FIG. 7 schematically illustrates the extended model MM generated from the model M and the training data. The dimension of the extended model MM matches with the dimension of the model DM. In addition, in the following, the extended model MM will be described as being $y=MM(x_1, x_2)$.

Next, in operation S20, the generation unit 26 fuses the models DM and MM to generate the hybrid model HM. As an example, the generation unit 26 generates a model represented by the following expression (3) as the hybrid model HM.

$$y = \alpha(x_1, x_2)\text{E } DM(x_1, x_2) + (1 - \alpha(x_1, x_2))\text{E } MM(x_1, x_2)$$

...(3)

Here, $\alpha(x_1, x_2)$ means the confidence of the model DM, and the range in which $\alpha(x_1, x_2)$ is acquired is $0 \leq \alpha(x_1, x_2) \leq 1$. The confidence $\alpha(x_1, x_2)$ has a large value in a range in which there is a lot of training data (a range in which training data exists densely) and has a small value in a range in which there is little training data (a range in which training data exists sparsely). In addition, when the model DM is a kernel regression function generated by k-nearest neighbor crossed kernel regression, the confidence may be obtained based on the magnitude of a confidence interval width. The confidence interval width is the value of standard deviation that indicates how much an estimated value output by the kernel regression function deviates. As the confidence interval width increases, the accuracy of the calculated estimated value decreases. Therefore, as the confidence interval width increases, $\alpha(x_1, x_2)$ becomes a smaller value.

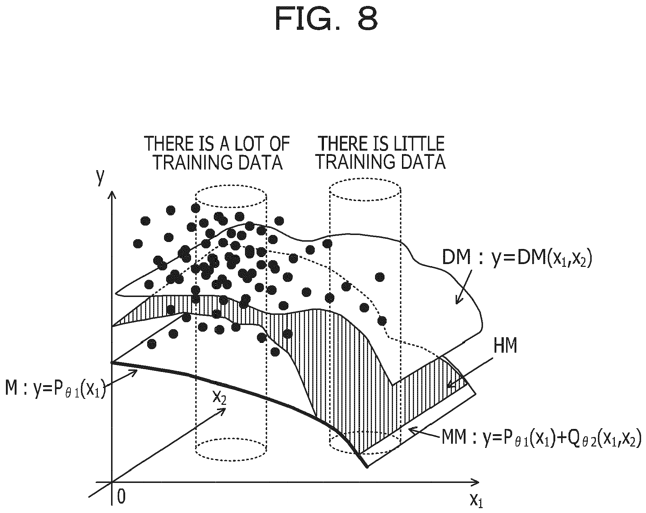

FIG. 8 schematically illustrates the hybrid model HM. As illustrated in FIG. 8, since the confidence of the model DM is relatively high in a region where there is a lot of training data, the degree of influence of the model DM increases, so that the hybrid model HM approaches the model DM. Meanwhile, since the confidence of the model DM is relatively low in a region where there is little training data, the degree of influence of the extended model MM increases, so that the hybrid model HM approaches the extended model MM. In addition, the hybrid model HM has descriptiveness characteristics since it includes at least the extended model MM.

Next, in operation S22, the generation unit 26 transmits the generated hybrid model HM to the car navigation of the EV car 70. As described above, the car navigation estimates the consumption of the EV battery after traveling on the candidate route using the hybrid model HM and provides the user with the estimation result as well as the candidate route by displaying them on a screen.

In addition, when the determination in operation S16 is negative, there is no need to extend the model M, and therefore, the processing proceeds to operation S20 without passing through operation S18. After that, the generation unit 26 executes the processing of operations S20 and S22 as described above. Here, the determination in operation S16 is negative even when the dimension of the model DM is lower than that of the model M, but, in this case, the dimension of the model DM may be matched with the dimension of the model M by increasing the types of training data.

As described above in detail, according to the present embodiment, the identifying unit 22 compares the model DM and the model M acquired by the model acquisition unit 20 to identify a missing class that is not included in the classes of input data that is input to the model M among the classes of input data that is input to the model DM. Then, the extension unit 24 extends the model M by the correction term for inputting the missing class of input data to generate the extended model MM, and the generation unit 26 fuses the extended model MM and the model DM to generate the hybrid model HM. Thus, in the present embodiment, the hybrid models HM may be generated by fusing the models DM and M having different dimensions. Accordingly, with the use of the hybrid model HM, the demerits of one of the models DM and M may be supplemented by the other model. For example, although the model DM has a descriptiveness problem, this descriptiveness problem may be solved by using the hybrid model HM.

Further, in the hybrid model HM of the present embodiment, when the training data used to create the model DM exists more densely in a first range than in a second range, the model DM has a higher degree of influence in the first range than in the second range and the extended model MM has a higher degree of influence in the second range than in the first range. As such, by increasing the influence of the model DM having relatively high estimation accuracy in the range in which the training data exists densely and increasing the degree of influence of the model MM in which the estimation accuracy is less affected by the density of training data in the range in which the training data exists sparsely, it is possible to improve the estimation accuracy by the hybrid model HM.

Further, in the hybrid model HM of the present embodiment, when the model DM is a kernel regression function generated by k-nearest neighbor crossed kernel regression, the degree of influence $\alpha(x_1, x_2)$ of the model DM and the extended model MM is determined based on the magnitude of the confidence interval width. Thus, when the model DM is a kernel regression function, it is possible to improve the estimation accuracy of the hybrid model HM.

Further, in the present embodiment, the correction term upon extension of the model M is a polynomial expression of nm order, so that the extended model MM may be appropriately generated from the model M when the model M is a differential equation system model. Further, when the model M is a kinematic model, the correction term upon extension of the model M may be approximated by a cubic polynomial expression. Thus, the extended model MM may be appropriately generated from the model M by a simplified and easy calculation.

In addition, in the embodiment, descriptions have been made on a case where the consumption of the EV battery after traveling on the candidate route is estimated by estimating the output current of the EV battery using the hybrid model HM, but the present disclosure is not limited thereto. For example, the hybrid model HM may be used to estimate the failure time of the EV battery or the failure probability of the EV battery. This makes it possible to perform a predictive maintenance of the EV battery. Therefore, maintenance may be appropriately performed.

Further, the hybrid model HM may also be used for various types of estimation or predictive maintenance of other devices (*e.g.,* a motor) of the EV car 70. Further, the hybrid model HM may be used for various types of estimation or predictive maintenance in other vehicles (e.g., motorcycles and ships) rather than being limited to the EV car 70. Furthermore, the hybrid model HM may also be used for various types of estimation or predictive maintenance of various devices in power plants and factories.

In addition, the above embodiment has described a case where the server 10 generates the hybrid model HM, but the present disclosure is not limited thereto, and an in-vehicle device such as a car navigation may generate the hybrid model HM. When the in-vehicle device generates the hybrid model HM, the server 10 or the network 80 may be omitted from the information processing system 100.

In addition, the processing function may be implemented by a computer. In that case, a program describing the processing content of a function that a processing apparatus needs to have is provided. By executing the program on a computer, the above processing function is implemented on the computer. The program describing the processing content may be recorded in a computer readable storage medium (excluding carrier waves).

When the program is distributed, the program is sold, for example, in the form of a portable storage medium such as a Digital Versatile Disc (DVD) or a Compact Disc Read Only Memory (CD-ROM) in which the program is recorded. Further, the program may be stored in a storage device of a server computer and may be transmitted from the server computer to another computer via a network.

The computer that executes the program stores, for example, the program recorded in the portable storage medium or the program transmitted from the server computer in a storage device thereof. Then, the computer reads out the program from the storage device thereof to execute a processing according to the program. In addition, the computer may also directly read out the program from the portable storage medium to execute a processing according to the program. Further, the computer may also sequentially execute a processing according to the received program whenever the program is transferred from the server computer.

The embodiment described above is an exemplary embodiment of the present disclosure. However, the present disclosure is not limited thereto, and various modifications may be made without departing from the scope of the present disclosure.

**Claims**

1. A composite model generation program that causes a computer to execute a process, the process comprising:

   acquiring a first model that is created using a plurality of pieces of training data and outputs a first estimation result estimated with respect to first input data and a second model that is created based on a physical law or human knowledge and outputs a second estimation result estimated with respect to second input data;
   identifying, by comparing the first model and the second model with each other, a missing class that is not included in classes of the second input data among classes of the first input data;
   extending the second model with a correction term for input of input data of the missing class; and
   generating a composite model in which the extended second model and the first model are fused together.

2. The composite model generation program according to claim 1, wherein
   in the composite model, when training data used to create the first model exists more densely in a first range than in a second range, the first model has a higher degree of influence in the first range than in the second range and the extended second model has a higher degree of influence in the second range than in the first range.

3. The composite model generation program according to claim 1 or 2, wherein
the degree of influence of each of the first model and the extended second model is determined based on a magnitude of a confidence interval width when the first model is a kernel regression function that is generated by k-nearest neighbor crossed kernel regression.

4. The composite model generation program according to any one of claims 1 to 3, wherein
the correction term is a polynomial expression of nm order (wherein "n" and "m" represent natural numbers).

5. The composite model generation program according to claim 4, wherein
the correction term is a cubic polynomial expression when the second model is a kinematic model.

6. A composite model generation method, comprising:

acquiring, by a computer, a first model that is created using a plurality of pieces of training data and outputs a first estimation result estimated with respect to first input data and a second model that is created based on a physical law or human knowledge and outputs a second estimation result estimated with respect to second input data;
identifying, by comparing the first model and the second model with each other, a missing class that is not included in classes of the second input data among classes of the first input data;
extending the second model with a correction term for input of input data of the missing class; and
generating a composite model in which the extended second model and the first model are fused together.

7. An information processing apparatus, comprising:

an acquisition unit that acquires a first model that is created using a plurality of pieces of training data and outputs a first estimation result estimated with respect to first input data and a second model that is created based on a physical law or human knowledge and outputs a second estimation result estimated with respect to second input data;
an identifying unit that identifies, by comparing the first model and the second model with each other, a missing class that is not included in classes of the second input data among classes of the first input data;
an extension unit that extends the second model with a correction term for input of input data of the missing class; and
a generation unit that generates a composite model in which the extended second model and the first model are fused together.

8. The information processing apparatus according to claim 7, wherein
in the composite model, when training data used to create the first model exists more densely in a first range than in a second range, the first model has a higher degree of influence in the first range than in the second range and the extended second model has a higher degree of influence in the second range than in the first range.

9. The information processing apparatus according to claim 7 or 8, wherein
the degree of influence of each of the first model and the extended second model is determined based on a magnitude of a confidence interval width when the first model is a kernel regression function that is generated by k-nearest neighbor crossed kernel regression.

10. The information processing apparatus according to any one of claims 7 to 9, wherein
the correction term is a polynomial expression of nm order (wherein "n" and "m" represent natural numbers).

11. The information processing apparatus according to claim 10, wherein
the correction term is a cubic polynomial expression when the second model is a kinematic model.

# FIG. 1

# FIG. 2

# FIG. 3

# FIG. 4

|  | MODEL DM | MODEL M |
|---|---|---|
| MAIN TERM | CURRENT<br>VOLTAGE<br>RESISTANCE | CURRENT<br>VOLTAGE<br>RESISTANCE |
| CORRECTION TERM | ACCELERATION<br>GRADIENT<br>MOTOR ROTATION SPEED | |
| METHOD | MACHINE LEARNING | PHYSICAL LAW OR KNOWLEDGE |
| NECESSITY OF DATA | LARGE | SMALL |
| DESCRIPTIVENESS | IMPOSSIBLE | POSSIBLE |
| PREDICTION ACCURACY | HIGH WHEN THERE IS A LOT OF DATA, AND LOW WHEN THERE IS LITTLE DATA | OT HITH (SOMEWHAT HIGH WHEN PHYSICAL LAW IS NOT COMPLICATED) |

# FIG. 5

```
                    ┌──────────┐
                    │  START   │
                    └────┬─────┘
                         ↓
        ┌──────────────────────────────────────┐
        │    ACQUIRE MODELS DM AND M            │ ∽ S10
        └──────────────────┬───────────────────┘
                           ↓
        ┌──────────────────────────────────────┐
        │ COMPARE MODELS DM AND M WITH EACH OTHER│ ∽ S12
        └──────────────────┬───────────────────┘
                           ↓
        ┌──────────────────────────────────────┐
        │ IDENTIFYDIMENSION THAT IS MISSING IN MODEL M│ ∽ S14
        └──────────────────┬───────────────────┘
                           ↓
                                          S16
   NO           ╱◇──────────────────────◇╲
   ┌───────────◇   IS THERE MISSING DIMENSION?  ◇
   │            ╲◇──────────────────────◇╱
   │                       │ YES
   │                       ↓
   │      ┌──────────────────────────────────────┐
   │      │  EXTEND MODEL M TO GENERATE EXTENDED  │ ∽ S18
   │      │             MODEL MM                  │
   │      └──────────────────┬───────────────────┘
   │                         │
   └─────────────────────────┤
                             ↓
        ┌──────────────────────────────────────┐
        │ FUSE MODELS DM AND MM TO GENERATE HYBRID│ ∽ S20
        │             MODEL HM                   │
        └──────────────────┬───────────────────┘
                           ↓
        ┌──────────────────────────────────────┐
        │  TRANSMIT HYBRID MODEL HM TO EV CAR   │ ∽ S22
        └──────────────────┬───────────────────┘
                           ↓
                    ┌──────────┐
                    │   END    │
                    └──────────┘
```

## FIG. 6A

$$M:y=P_{\theta 1}(x_1)$$

## FIG. 6B

TRAINING DATA

$$DM : y=DM(x_1,x_2)$$

# FIG. 7

# FIG. 8

THERE IS A LOT OF TRAINING DATA

THERE IS LITTLE TRAINING DATA

y

$DM : y=DM(x_1,x_2)$

HM

$M : y=P_{\theta 1}(x_1)$

$x_2$

$MM : y=P_{\theta 1}(x_1)+Q_{\theta 2}(x_1,x_2)$

0

$x_1$

**EP 3 828 785 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015535900 A
- JP 2019040244 A
- JP 2010536099 A
- JP 2014525063 A
- JP 2019507444 A